# FASCICULE DE BREVET EUROPEEN

(11) **EP 1 136 821 B1**
(45) Date de publication et mention de la délivrance du brevet: **02.07.2003**
(21) Numéro de dépôt: 01400739.7
(22) Date de dépôt: 22.03.2001
(51) Int. Cl.: G01N 29/18, G01N 29/10

(54) **Procédé d'évaluation de résilience d'un assemblage soudé et appareils d'analyse correspondant mesurant de vitesse d'ondes ultrasonores superficielles**
Methode zur Messung der Festigkeit einer geschweissten Anordnung sowie hierauf beruhende Geräte zur Messung der Geschwindigkeit von Ultraschall-Oberflächenwellen
Method for the evaluation of the stability of a welded assembly and corresponding apparatus for measuring the velocity of ultrasonic surface waves

(30) Priorité: 23.03.2000 FR 0003696
(43) Date de publication de la demande: 26.09.2001
(73) Titulaire: Snecma Moteurs, 75015 Paris (FR)
(72) Inventeur: Chatellier, Jean-Yves, 94110 Arcueil (FR); Ramahefasolo, Daniel, 91450 Echarcon (FR)

(56) Documents cités:
- DE-C- 19 612 925
- US-A- 5 408 882
- US-A- 5 920 014

## Description

Le sujet de l'invention est un procédé d'évaluation de résilience d'un assemblage soudé, ainsi qu'un appareil de mesure convenant à ce procédé et affecté à la mesure de vitesses d'ondes ultrasonores superficielles.

La résilience d'une pièce mécanique est l'énergie qu'il faut dépenser pour la rompre. Elle peut être évaluée par des essais menés sur des éprouvettes représentatives de l'assemblage et respectant certaines normes dans des appareils spécialisés comme le mouton de Charpy. Il est évident que la fabrication d'éprouvettes et l'utilisation d'une machine sont contraignantes et que d'autres méthodes plus faciles d'emploi, et notamment des contrôles non destructifs par lesquels la résilience serait évaluée indirectement, seraient avantageux.

Un tel procédé d'évaluation indirecte de résilience a été conçu et forme le sujet de cette invention. Il repose sur l'exploitation d'ondes ultrasonores de surface et s'applique à une famille particulière de pièces : les assemblages soudés, notamment sans apport de matière, par diffusion , d'une tôle plutôt mince sous un substrat qui peut être une autre tôle ou une pièce plus épaisse.

Les essais par ultrasons se déroulent normalement après avoir plongé la pièce à analyser dans un liquide. Les ultrasons sont émis dans le liquide vers la pièce, et ils peuvent être réfléchis ou absorbés par celle-ci quand ils l'atteignent. Ils peuvent aussi, pour certaines incidences favorables, subir une conversion de mode de propagation et se propager à la surface de la pièce, sans pénétrer au-delà d'une profondeur faible, en donnant des ondes superficielles appelées ondes de Rayleigh. Un exemple d'utilisation d'ondes ultrasonores pour un contrôle d'opération de soudage en moyen d'une tête d'émission inclinée et d'une tète de réception inclinée avec une inclinaison opposée à celle de la tête d'émission est donné par US-A 5 920 014.
Selon ce procédé, en cours de soudage, l'instant où la température de fusion est atteinte est déterminé et le volume du joint de soudure est déterminé en fonction de la durée du soudage. Les recherches des inventeurs ont montré que ces ondes de surface pouvaient être corrélées à la qualité de soudure des assemblages définis plus haut, et plus précisément qu'un paramètre lié à la vitesse de propagation de ces ondes dans ces assemblages pouvait être corrélé à leur résilience, la soudure affectant la propagation des ondes et ce paramètre en fonction de sa qualité.

Sous sa forme la plus générale, l'invention est un procédé d'évaluation de résilience d'un assemblage soudé obtenu par soudage-diffusion d'un substrat sur une tôle, caractérisé en ce qu'il consiste à produire des ondes ultrasonores de surface sur le substrat, à mesurer une vitesse desdites ondes puis à en déduire un paramètre de vitesse, et à déduire la résilience de l'assemblage d'après une fonction de corrélation, obtenue antérieurement sur des éprouvettes d'étalonnage comprenant un assemblage soudé similaire, qui relie la résilience des éprouvettes d'étalonnage au paramètre de vitesse des éprouvettes d'étalonnage.

Il est préférable de mesurer deux vitesses de ces ondes sur l'assemblage soudé, dans deux directions principales du substrat, à cause de l'anisotropie de celui-ci. Les inventeurs estiment que le paramètre de vitesse doit plutôt être déduit de celle des deux vitesses qui est la plus lente. Ce paramètre peut être une différence de vitesse des ondes ultrasonores mesurées sur la tôle de l'assemblage soudé et sur une pièce de référence faite en la matière de base de la tôle mais dépourvue d'assemblage soudé ou sur la même tôle à deux fréquences 1 MHz et 5 MHz. Il convient alors que les vitesses sur lesquelles porte le calcul soient mesurées dans les mêmes conditions, c'est-à-dire qu'elles concernent la même direction de mesure sur la tôle de l'assemblage soudé et la tôle de la pièce de référence.

Un autre aspect de l'invention est un appareil de mesure convenant à ce procédé ; il s'agit d'un appareil de mesure de vitesse d'ondes ultrasonores de surface sur une pièce, comprenant une tête d'émission des ondes dirigée vers la pièce mais avec une inclinaison, et une seconde tête, affectée soit à recueillir une portion des ondes diffusée de la pièce, soit à renvoyer ladite portion vers la tête d'émission en un écho, la seconde tête étant dirigée vers la pièce mais avec une inclinaison opposée à l'inclinaison de la tête d'émission, caractérisé en ce que la seconde tête comprend deux faces actives, chargées de recueillir ou de renvoyer ladite portion des ondes, disposées en gradins et à une distance identique de la pièce.

Avantageusement, il comprend un bâti et des mécanismes de support des têtes sur le bâti qui sont conçues de manière à permettre de régler les inclinaisons des têtes, Un autre aspect de l'invention est un appareil selon la revendication 9, ou les surfaces actives soient cylindriques à axes parallèles et de même rayon, avec une seconde tête orthogonale à la surface de la pièce.

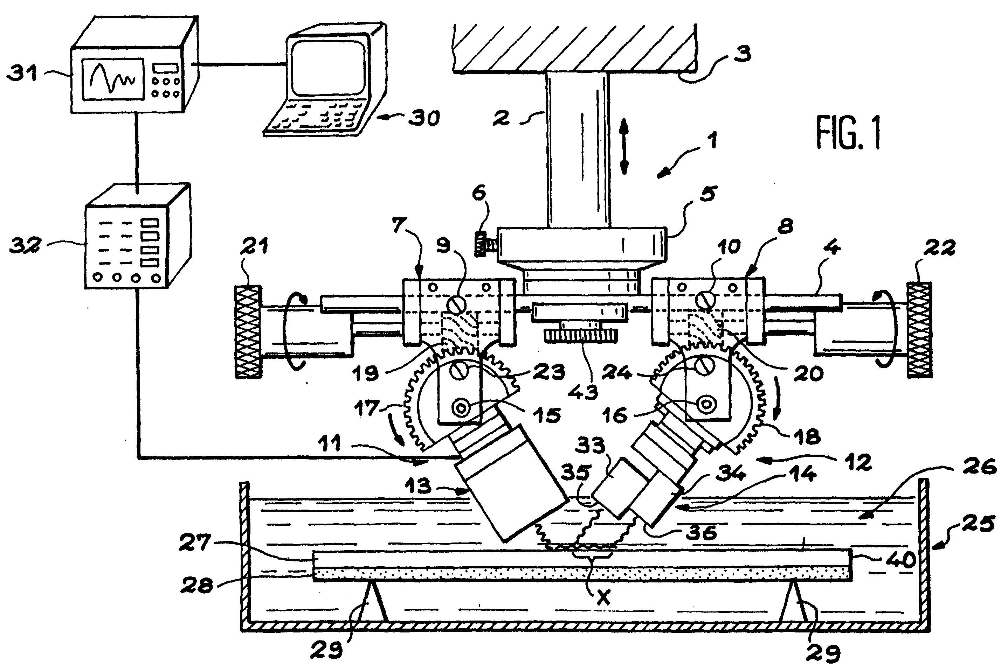

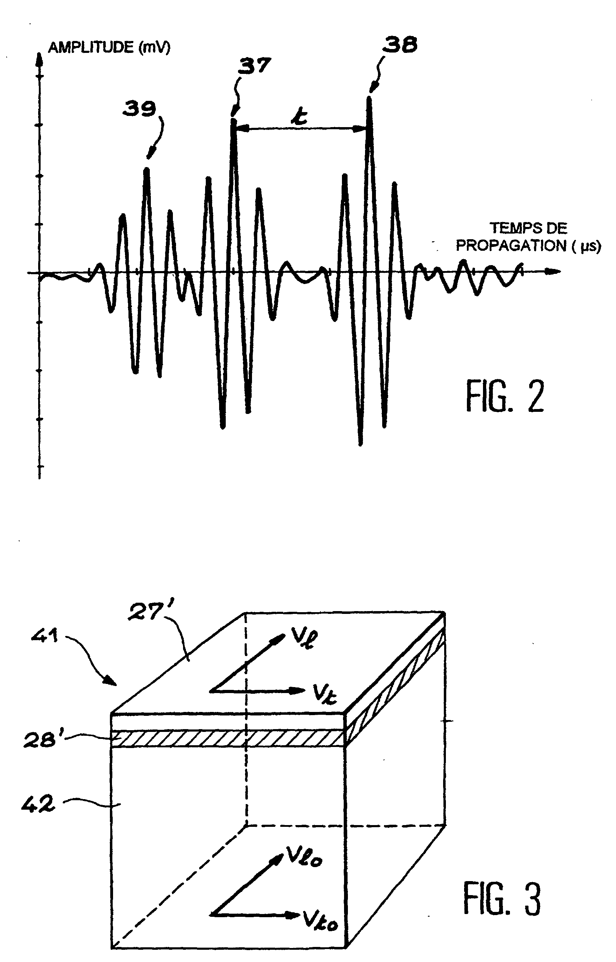

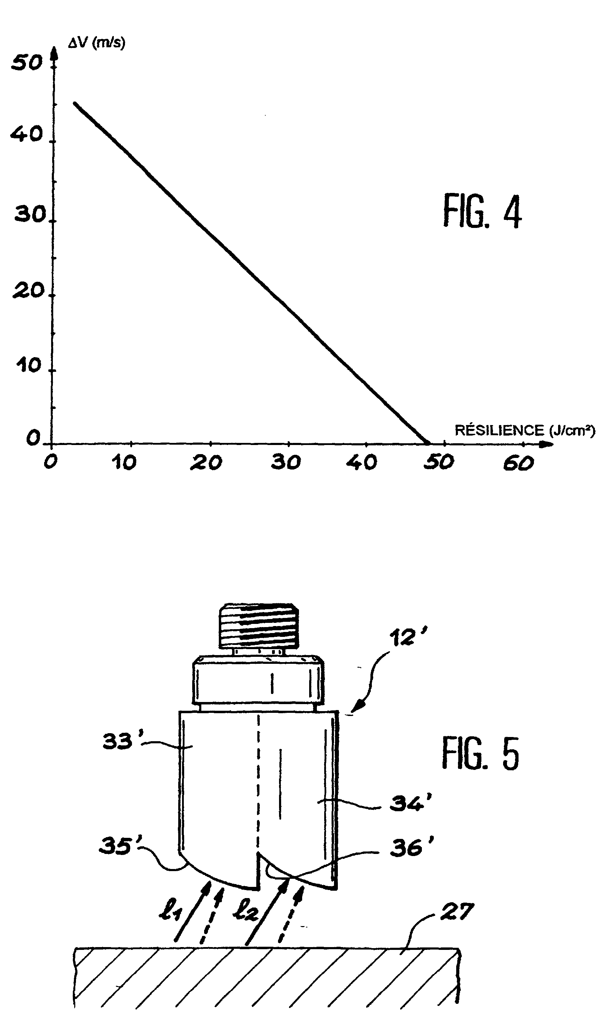

L'invention sera maintenant décrite en référence aux figures, sur lesquelles :
■ la figure 1 est une vue générale de la machine utilisée,
■ la figure 2 est une vue d'un relevé de mesures,
■ la figure 3 représente une pièce de référence ou une éprouvette,
■ la figure 4 est un exemple concret de fonction de corrélation obtenue,
■ et la figure 5 illustre un perfectionnement à la machine.

La machine utilisée comprend un bâti 1 pouvant être composé d'une colonne 2 verticale de suspension à un point fixe 3 et d'une glissière 4 reliée à la colonne 2 par l'intermédiaire d'un coulisseau 5 pouvant être fixé à un endroit déterminé de la colonne 2 par une vis de pression 6. Deux curseurs 7 et 8 sont placés sur les côtés opposés de la glissière 4 et peuvent être retenus en place par des vis de pression-9 et 10. Ils portent chacun une tête affectée à la mesure, de référence respective 11 et 12 et dont l'élément essentiel est un capteur à ultrasons 13 pour la première et un réflecteur 14 pour la seconde. Les têtes 11 et 12 sont montées sur les curseurs 7 et 8 par des pivots 15 et 16 horizontaux, parallèles entre eux et perpendiculaires à la direction de la glissière 4, et elles sont munies de secteurs dentés 17 et 18 formant des crémaillères engrenant avec des vis sans fin 19 et 20 actionnées par des poignées de réglage 21 et 22 établies sur les curseurs 7 et 8 de sorte que les têtes 11 et 12 puissent être portées à des inclinaisons choisies, mais opposées l'une à l'autre dans les mesures afin que le capteur 13 et le réflecteur 14 soient dirigés dans des directions descendantes et convergentes. D'autres vis de fixation 23 et 24 de blocage des têtes 11 et 12 sur les curseurs 7 et 8 permettent d'interdire des rotations involontaires des secteurs dentés 17 et 18 par rapport aux curseurs 7 et 8 quand l'inclinaison voulue a été atteinte. Enfin, un volant 43 placé sous le coulisseau 5 permet de faire tourner la glissière 4 dans un plan horizontal.

Dans la réalisation illustrée ici, le capteur 13 est chargé à la fois d'émettre des ultrasons et de recueillir des échos, ainsi qu'il est fréquent dans cette technique, et le réflecteur 14 est chargé de produire ces échos ; il serait cependant possible de remplacer le réflecteur 14 par une paire de capteurs de la façon qu'on décrira plus loin sans que le principe de mesure soit modifié.

La machine surplombe une cuve de mesure 25 partiellement remplie d'eau, de façon que le capteur 13 et le réflecteur 14 soient partiellement immergés et que les ondes ultrasonores utilisées ne sortent pas du liquide ; la pièce d'étude de la machine est un assemblage soudé 26, composé d'une tôle 28 plutôt mince et d'un substrat 27 qui peut être une autre tôle ou une pièce plus épaisse disposée au dessus, face au capteur 13 et au réflecteur 14,. L'assemblage soudé 26 est posé sur des blocs 29 au fond de la cuve 25.

Le capteur 13 est relié à une console de commande 30 par l'intermédiaire d'un oscilloscope 31 chargé d'afficher les résultats et d'un générateur d'impulsions 32. Le capteur 13 émet une onde ultrasonore obliquement dans l'eau jusqu'à ce qu'elle atteigne le substrat 27. Si l'inclinaison θ de la tête 11 et de la direction des ondes est bien choisie (environ 30°), l'onde est transmise au substrat 27 sous forme d'une onde superficielle de Rayleigh localisée sur la face supérieure du substrat 27 et à une faible profondeur, qui atteint cependant la soudure entre le substrat 27 et la tôle 28. L'onde se dirige vers le bord du substrat 27, mais une partie se diffuse toutefois vers le haut, à l'inclinaison correspondant à la valeur θ donnée ci-dessus, et symétriquement à la direction d'incidence des ondes par rapport à la verticale.

Le réflecteur 14 est composé de deux prismes 33 et 34 dont les surfaces inférieures 35 et 36, tournées vers le substrat 27, réfléchissent les ultrasons. Si ces surfaces sont perpendiculaires à la direction de diffusion de l'onde de surface vers le haut, la portion d'onde ainsi diffusée est renvoyée en écho par les prismes 33 et 34 vers le substrat 27, avant de former une onde superficielle de Rayleigh de retour dont une partie est diffusée selon le même principe vers le capteur 13. Les trajets des ondes sont absolument identiques pour l'aller et le retour. Ainsi, le capteur 13 enregistre deux échos correspondant à des réflexions des ondes sur les surfaces réfléchissantes 35 et 36, et ces échos sont distants du temps t nécessaire pour que l'onde parcoure deux fois la distance X (à l'aller et au retour) séparant les endroits du substrat 27 d'où des portions d'onde sont diffusées vers ces surfaces 35 et 36.

Les deux échos portent les références 37 et 38 sur le relevé fourni par l'oscilloscope 31 et représenté à la figure 2. On peut les identifier facilement puisqu'ils sont semblables ; d'autres échos tel 39, produit par une réflexion de l'onde sur le bord 40 du substrat 27, et qui peut revenir au capteur 13 avant les précédents à cause de la plus grande vitesse de l'onde dans les solides, peuvent aussi être observés mais sont sans utilité pour le procédé.

Des essais préliminaires de réglage sont entrepris en ajustant les inclinaisons des têtes 11 et 12 pour rendre les échos 37 et 38 les plus élevés en suscitant les conversions de mode les plus complètes avant de procéder aux essais de la façon indiquée ci-dessus afin de calculer une vitesse de propagation des ondes superficielles dans le substrat 27 selon la formule V=2X/t : le temps de parcours des ondes dans le liquide n'est pas considéré puisque les surfaces réfléchissantes 35 et 36 sont étagées pour se trouver sensiblement à la même distance du substrat 27 à l'inclinaison θ.

En pratique, on peut procéder aux essais avec des éprouvettes plus complexes comme celle (41) que la figure 3 illustre. Elle se compose d'un substrat 27' semblable au substrat 27 (c'est-à-dire de même épaisseur, de même composition et fabriquée de la même façon), d'une tôle 28' semblable à la tôle 28 par la composition et d'une couche inférieure 42 formée de la matière de base du substrat 27 (ou 27'), c'est-à-dire qu'elle a la même composition et a été fabriquée de la même façon tout en étant beaucoup plus épaisse. Elle est soudée à la face de la tôle 28' qui est opposée au substrat 27'.

Les éprouvettes 41 mises sous la machine à la place de l'assemblage soudé 26 permettent de mesurer successivement les vitesses V1 et Vt des ultrasons de surface dans les deux directions principales, longitudinale et transversale, du substrat 27', puis les vitesses correspondantes V10 et Vt0 de la couche inférieure 42 après avoir retourné l'éprouvette 41. Les directions principales sont régies par la direction de laminage du substrat 27'. En effet, le laminage produit une anisotropie dans les tôles et donc des différences assez sensibles entre V1 et Vt ou V10 et Vt0. Les valeurs V1 et Vt sont influencées par la soudure opérée entre 27' et 28', alors que les valeurs V10 et Vt0 expriment les propriétés intrinsèques de la matière de base de la couche inférieure 42, dont l'épaisseur est trop importante pour que les ondes pénètrent jusqu'à la soudure avec la tôle 28'. Un résultat identique est obtenu en faisant la mesure à plus haute fréquence (5MHz) successivement des vitesses V1 et Vt des ultrasons de surface dans les deux directions principales longitudinale et transversale, du substrat 27' Nous retrouvons à cette fréquence de 5MHz des valeurs de vitesses identiques à V10 et Vt0 exprimant les propriétés intrinsèques de la matière. On doit ajouter qu'il est possible de procéder à ces mesures sans souder la tôle 28' à la couche inférieure 42 : on utiliserait alors, en plus des assemblages soudés 26, la couche inférieure 42 séparée pour calculer V10 et Vt0.

On choisit alors la vitesse la plus petite parmi Vl et Vt, et encore la vitesse la plus petite parmi V10 et Vt0, pour chaque éprouvette 41 et on soustrait ces valeurs les plus petites l'une à l'autre pour obtenir un paramètre ΔV qui est très bien corrélé à la résilience de l'assemblage soudé entre le substrat 27' et la tôle 28'. Cette résilience est mesurée par un essai mécanique réalisé au mouton de Charpy ou avec une autre machine convenable. Ces essais sont normalisés et menés de manière classique, si bien qu'il est inutile de les détailler. Les éprouvettes utilisées pour cette mesure mécaniques doivent être semblables aux assemblages soudés 26 pour lesquelles on a mesuré Vl et Vt, c'est-à-dire que le substrat, la tôle et les conditions de leur soudage doivent être les mêmes.

La figure 4 montre une corrélation linéaire trouvée entre la différence des vitesses lentes ΔV (en m/s))définie ci-dessus et la résilience R (en J/cm²) pour des joints soudés de tôles en alliages de titane.

Quand la fonction de corrélation a été obtenue au moyen des étalonnages menés avec des éprouvettes 41 ou 26, avec des conditions différentes de soudage pour obtenir plusieurs points de cette fonction, des contrôles non destructifs sont possibles sur d'autres éprouvettes pour lesquelles on mesure ΔV : la résilience R est alors lue sur le graphique de corrélation.

Un raffinement à la machine sera finalement décrit au moyen de la figure 5 : il s'agit d'une conception améliorée de la seconde tête 12 chargée de la réflexion, où les prismes 33 et 34 sont remplacés par des prismes 33' et 34' dont les faces réfléchissantes 35' et 36' ne sont plus planes mais cylindriques, d'axes parallèles au pivot 16 et de rayons égaux : les ondes diffusées entre substrat 27 et ces surfaces réfléchissantes 35' et 36' sont toujours renvoyées dans la même direction à l'inclinaison θ, ce qui dispense de régler l'inclinaison de ce réflecteur modifié.

Le procédé permet d'accomplir des mesures en plusieurs endroits de l'assemblage soudé, et donc d'estimer la régularité de celui-ci.

## Revendications

1. Procédé d'évaluation de résilience d'un assemblage soudé (26) obtenu par soudage-diffusion d'un substrat (27) sur une tôle (28), qui consiste à produire des ondes ultrasonores de surface sur le substrat (27), à mesurer une vitesse desdites ondes puis à en déduire un paramètre de vitesse (ΔV), et à déduire la résilience de l'assemblage d'après une fonction de corrélation, obtenue antérieurement sur des éprouvettes comprenant un assemblage soudé similaire, qui relie la résilience des éprouvettes au paramètre de vitesse des éprouvettes.

2. Procédé d'évaluation de résilience d'un assemblage soudé selon la revendication 1, **caractérisé en ce qu'**il consiste à mesurer deux vitesses (Vl, Vt) desdites ondes sur l'assemblage soudé (26), dans deux directions principales du substrat (27).

3. Procédé d'évaluation de résilience d'un assemblage soudé selon la revendication 2, **caractérisé en ce que** le paramètre de vitesse est déduit de celle des deux vitesses qui est la plus lente.

4. Procédé d'évaluation de résilience d'un assemblage soudé selon l'une quelconque des revendications 1 à 3, **caractérisé en ce que** le paramètre de vitesse est une différence de vitesse des ondes ultrasonores de surface sur la tôle de l'assemblage soudé et sur une pièce faite (42) en matière de base de la tôle ou sur la même tôle à deux fréquences 1MHz et 5MHz.

5. Procédé d'évaluation de résilience d'un assemblage soudé selon les revendications 3 et 4, **caractérisé en ce que** la différence des vitesses est calculée pour celle des deux vitesses qui est la plus lente sur l'assemblage soudé et celle de deux vitesses, mesurées dans deux directions principales de la pièce faite en matière de base de la tôle, qui est la plus lente.

6. Appareil de mesure de vitesse d'ondes ultrasonores de surface sur une pièce, comprenant une tête d'émission (11) des ondes dirigée vers la pièce mais avec une inclinaison, et une seconde tête (12), affectée soit à recueillir une portion des ondes diffusée de la pièce, soit à renvoyer ladite portion vers la tête d'émission en un écho, la seconde tête étant dirigée vers la pièce mais avec une inclinaison opposée à l'inclinaison de la tête d'émission et comprenant deux faces actives (35, 36), chargées de recueillir ou de renvoyer ladite portion des ondes, disposées en gradins et à une distance identique de la pièce.

7. Appareil de mesure de vitesse d'ondes ultrasonores de surface selon la revendication 6, **caractérisé en ce qu'**il comprend un bâti et des mécanismes de support (4, 17, 18, 19, 20, 21, 22) des têtes sur le bâti, conçus de manière à permettre de régler les inclinaisons des têtes.

8. Appareil de mesure de vitesses d'ondes ultrasonores de surface selon l'une des revendications 6 ou 7, **caractérisé en ce que** les têtes (11, 12) sont montées sur un support (4, 5, 43) pivotant dans un plan horizontal.

9. Appareil de mesure de vitesses d'ondes ultrasonores de surface sur une pièce, comprenant une tête d'émission des ondes dirigée vers la pièce mais avec une inclinaison et une second a tête (12'), affectée soit à recueillir une portion des ondes diffusée de la pièce, soit à renroyer ladite portion vers la tête d'émission en un écho, la seconde tête (12') étant placée orthogonalement à la surface de pièce (27) et comprenant deux faces actives (35',36'), chargées de recueillir ou de renvoyer ladite portion des ondes et qui sont cylindriques, aux axes parallèles et de même rayon.

## Patentansprüche

1. Verfahren zum Bestimmen der Festigkeit einer durch Diffusionsschweißen hergestellten Schweißverbindung (26) eines Substrats (27) auf einem Blech (28), wobei das Verfahren darin besteht, auf dem Substrat (27) Ultraschall-Oberflächenwellen zu erzeugen, eine Geschwindigkeit der Wellen zu messen und dann daraus einen Geschwindigkeitsparameter (ΔV) abzuleiten und die Festigkeit der Verbindung nach einer zuvor an Probekörpern mit einer ähnlichen Schweißverbindung gewonnenen Korrelationsfunktion herzuleiten, die die Festigkeit der Probekörper mit dem Geschwindigkeitsparameter der Probekörper verknüpft.

2. Verfahren zum Bestimmen der Festigkeit einer Schweißverbindung nach Anspruch 1, **dadurch gekennzeichnet, daß** es darin besteht, daß zwei Geschwindigkeiten (VI, Vt) der Wellen auf der Schweißverbindung (26) in zwei Hauptrichtungen des Substrats (27) gemessen werden.

3. Verfahren zum Bestimmen der Festigkeit einer Schweißverbindung nach Anspruch 2, **dadurch gekennzeichnet, daß** der Geschwindigkeitsparameter aus der niedrigsten der beiden Geschwindigkeiten hergeleitet wird.

4. Verfahren zum Bestimmen der Festigkeit einer Schweißverbindung nach einem der Ansprüche 1 bis 3, **dadurch gekennzeichnet, daß** der Geschwindigkeitsparameter eine Differenz der Geschwindigkeiten der Ultraschall-Oberflächenwellen auf dem Blech der Schweißverbindung und auf einem aus dem Grundmaterial des Blechs hergestellten Werkstücks (42) oder auf dem gleichen Blech mit den beiden Frequenzen 1 MHz und 5 MHz ist.

5. Verfahren zum Bestimmen der Festigkeit einer Schweißverbindung nach Anspruch 3 und 4, **dadurch gekennzeichnet, daß** Differenz der Geschwindigkeiten für diejenige der beiden Geschwindigkeiten, die auf der Schweißverbindung die niedrigste ist, und für diejenige der beiden Geschwindigkeiten, die in zwei Hauptrichtungen des aus dem Grundmaterial des Blechs hergestellten Teils, die die niedrigste ist, berechnet wird.

6. Gerät zum Messen der Geschwindigkeit von Ultraschall-Oberflächenwellen auf einem Werkstück mit einem Sendekopf (11) zum Aussenden von Wellen, der unter einer Neigung auf das Werkstück gerichtet ist, und einem zweiten Kopf (12), der entweder einen Anteil der von dem Werkstück gestreuten Wellen aufnimmt oder diesen Anteil in einem Echo zu dem Sendekopf zurückschickt, wobei der zweite Kopf unter einer der Neigung des Sendekopfes entgegengesetzten Neigung auf das Werkstück gerichtet ist und zwei aktive Flächen (35, 36) zum Empfangen oder zum Zurückschicken des genannter Anteils der Wellen aufweist, die in Stufen und in identischem Abstand zu dem Werkstück angeordnet sind.

7. Gerät zum Messen der Geschwindigkeit von Ultraschall-Oberflächenwellen nach Anspruch 6, **dadurch gekennzeichnet, daß** es ein Gestell aufweist sowie Haltemechanismen (4, 17, 18, 19, 20 ,21, 22) zum Halten der Köpfe an dem Gestell, die so ausgebildet sind, daß sie ein Justieren der Neigungen der Köpfe ermöglichen.

8. Gerät zum Messen der Geschwindigkeit von Ultraschall-Oberflächenwellen nach einem der Ansprüche 6 oder 7, **dadurch gekennzeichnet, daß** die Köpfe (11, 12) an einem in einer horizontalen Ebene verschwenkbaren Halter (4, 5, 43) montiert sind.

9. Gerät zum Messen der Geschwindigkeit von Ultraschall-Oberflächenwellen auf einem Werkstück mit einem Sendekopf zum Aussenden von Wellen, der unter einer Neigung auf das Werkstück gerichtet ist, und einem zweiten Kopf (12'), der entweder einen Anteil der von dem Werkstück gestreuten Wellen aufnimmt oder diesen Anteil in einem Echo zu dem Sendekopf zurückschickt, wobei der zweite Kopf (12') orthogonal zur Oberfläche des Werkstücks (7) angeordnet ist und zwei aktive Flächen (35', 36') zum Empfangen oder zum Zurückschicken des genannten Anteils der Wellen aufweist, die zylindrisch sind, parallele Achsen und gleichen Radius haben.

## Claims

1. Method of evaluating the toughness of a welded assembly (26) obtained by diffusion welding a substrate (27) to a plate (28), which consists in producing ultrasonic surface waves on the substrate (27), in measuring a velocity of the said waves and then deducing a velocity parameter (ΔV) therefrom and in deducing the toughness of the assembly using a correlation function, obtained beforehand on test pieces comprising a similar welded assembly, which relates the toughness of the test pieces to the velocity parameter of the test pieces.

2. Method of evaluating the toughness of a welded assembly according to Claim 1, **characterized in that** it consists in measuring two velocities (V1, Vt) of the said waves on the welded assembly (26) in two principal directions of the substrate (27).

3. Method of evaluating the toughness of a welded assembly according to Claim 2, **characterized in that** the velocity parameter is deduced from that one of the two velocities which is the slower.

4. Method of evaluating the toughness of a welded assembly according to any one of Claims 1 to 3, **characterized in that** the velocity parameter is a difference in velocity of the ultrasonic surface waves on the plate of the welded assembly and on a part (42) made of the base material of the plate or on the same plate at two frequencies, 1 MHz and 5 MHz.

5. Method of evaluating the toughness of a welded assembly according to Claims 3 and 4, **characterized in that** the velocity difference is calculated for that one of the two velocities on the welded assembly which is the slower and for that one of the two velocities measured in the two principal directions of the part made of a base material of the plate which is the slower.

6. Apparatus for measuring the velocities of ultrasonic surface waves on a part, comprising a wave emission head (11) directed towards the part but at an angle of inclination, and a second head (12), assigned either to receiving a portion of the waves that is scattered by the part or to reflect the said portion back towards the emission head as an echo, the second head being directed towards the part but at an opposite angle of inclination to the angle of inclination of the emission head and comprising two active faces (35, 36) responsible for receiving or for reflecting the said portion of the waves, said active faces being placed in a staggered fashion and at the same distance from the part.

7. Apparatus for measuring the velocities of ultrasonic surface waves according to Claim 6, **characterized in that** it comprises a mount and mechanisms (4, 17, 18, 19, 20, 21, 22) for supporting the heads on the mount, these being designed so as to allow the angles of inclination of the heads to be adjusted.

8. Apparatus for measuring the velocities of ultrasonic surface waves according to either of Claims 6 and 7, **characterized in that** the heads (11, 12) are mounted on a support (4, 5, 43) that pivots in a horizontal plane.

9. Apparatus for measuring the velocities of ultrasonic surface waves on a part, comprising a wave emission head directed towards the part, but at an angle of inclination, and a second head (12') assigned either to receiving a portion of the waves that is scattered by the part or to reflecting the said portion back towards the emission head as an echo, the second head (12') being placed orthogonally to the surface of the part (27) and comprising two active faces (35', 36') that are responsible for receiving or for reflecting the said portion of the waves and are cylindrical with parallel axes and of the same radius.
